# EUROPEAN PATENT APPLICATION

(11) **EP 4 822 555 A1**
(43) Date of publication of application: **14.10.2026**
(21) Application number: 26162568.5
(22) Date of filing: 05.03.2026
(51) Int. Cl.: G06F 16/3329, G06F 21/62, G06F 40/35, G06F 40/216, G06F 40/284

(54) **PRIVACY PROTECTION FOR PROMPTS TO LANGUAGE MODELS**

(30) Priority: 05.03.2025 US 202519071509
(71) Applicant: Bytedance Technology Ltd., KY1 - 1205 Grand Cayman Cayman Islands (KY); Beijing Zitiao Network Technology Co., Ltd., Beijing 100190 (CN)
(72) Inventor: Wu, Haoqi, Chaoyang District, Beijing, 100028 (CN); Dai, Wei, Culver City, California, 90230 (US); Wang, Li, Chaoyang District, Beijing, 100028 (CN)
(74) Representative: Grünecker Patent- und Rechtsanwälte PartG mbB

(57) **Abstract**

Methods, systems, and apparatus, including computer programs encoded on computer storage media, are provided. One example method includes receiving (602) an input prompt. For a first token in the input prompt, a utility metric comprising *m* utility scores is determined (606), each utility score indicating a relevance of a token in a vocabulary of *m* tokens with respect to the first token; the vocabulary of *m* tokens are assigned (608) to *N* buckets based on the utility scores of the *m* tokens; bucket utility scores of the *N* buckets are determined (610) based on utility scores of tokens assigned to the *N* buckets; a target bucket is sampled (612) from the *N* buckets based on the bucket utility scores; and a replacement token corresponding to the first token is sampled (614) from the target bucket. The method further includes generating (616) a perturbed prompt corresponding to the input prompt.

## Description

### TECHNICAL FIELD

This specification relates to machine learning, and in particular, to privacy protection of prompts to language models.

### BACKGROUND

Language models can make inferences, generate content, and provide services based on prompts received from users. However, the prompts may include sensitive information and need privacy protection. Without proper protection, the sensitive information could be exposed to unauthorized access, misuse, or breaches, posing risks to individuals and organizations.

### SUMMARY

This specification describes technologies for privacy protection to prompts to language models. According to a first aspect, a method is provided. The method includes receiving an input prompt in a natural language, where the input prompt comprises a sequence of tokens. For a first token in the sequence of tokens, a context metric of the first token is determined in the context of the sequence of tokens in the input prompt, a distance metric is determined to indicate a distance between an embedding of the first token and an embedding of each of a set of tokens included in a vocabulary, a utility metric is determined based on the context metric and the distance metric, and a replacement token of the first token is sampled from the vocabulary based on the utility metric. The method further includes generating a perturbed prompt corresponding to the input prompt, where the perturbed prompt comprises the replacement token.

With reference to the first aspect, in some implementations, the method further includes: for each token of the sequence of tokens, sampling a replacement token from the vocabulary based on a utility metric of the token, where the perturbed prompt comprises replacement tokens corresponding to the sequence of tokens.

With reference to the first aspect, in some implementations, a set of m tokens are included in the vocabulary, where m is a positive integer. The context metric is a first vector comprising m elements, where the *k^{th}* element *(k =* 1, 2, ..., *m*) in the first vector indicates a contextual relevance of the *k^{th}* token of the set of *m* tokens in the context of the sequence of tokens in the input prompt.

With reference to the first aspect, in some implementations, the sequence of tokens comprise *n* tokens, where *n* is a positive integer. The first token is at the *i^{th}* position in the sequence of tokens. Determining the context metric includes: replacing the first token with a mask token in the vocabulary to generate a second sequence of tokens; sending the second sequence of tokens to a Bert-base model; and obtaining a context logit of the mask token indicating a contextual relevance of the mask token in the context of the second sequence of tokens, where the first vector comprises the context logit of the mask token.

With reference to the first aspect, in some implementations, determining the context metric includes sending tokens preceding the first token in the sequence of tokens to a GPT2-base model, and receiving the first vector from the GPT2-base model.

With reference to the first aspect, in some implementations, the distance metric is a second vector comprising m elements, where the *k^{th}* element in the second vector indicates a distance between the embedding of the first token and an embedding of the *k^{th}* token of the set of m tokens.

With reference to the first aspect, in some implementations, the utility metric is a third vector comprising m elements, where the *k^{th}* element in the third vector is generated based on the *k^{th}* element in the first vector with the *k^{th}* element in the second vector.

With reference to the first aspect, in some implementations, the *k^{th}* element in the third vector is generated based on a weighted product of the *k^{th}* element in the first vector and the *k^{th}* element in the second vector, where a weight of the *k^{th}* element in the first vector is different from a weight of the *k^{th}* element in the second vector.

With reference to the first aspect, in some implementations, sampling the replacement token includes sampling the replacement token from the vocabulary based on an exponential mechanism, where a probability of the *k^{th}* token of the set of m tokens to be sampled as the replacement token is determined based on the *k^{th}* element in the third vector.

With reference to the first aspect, in some implementations, the method further includes sending the perturbed prompt to a server running a language model.

According to a second aspect, a method is provided. The method includes receiving an input prompt in a natural language, where the input prompt comprises a sequence of tokens. For a first token of the sequence of tokens, a utility metric comprising m utility scores is determined, where each of the m utility scores indicates a relevance of a token in a vocabulary of m tokens with respect to the first token; the vocabulary of m tokens are assigned to *N* buckets based on the utility scores of the m tokens, where each bucket corresponds to an interval of utility scores; N bucket utility scores of the N buckets are determined based on utility scores of tokens assigned to the N buckets; a target bucket is sampled from the N buckets based on the *N* bucket utility scores of the *N* buckets; and a replacement token corresponding to the first token is sampled from the target bucket. The method further includes generating a perturbed prompt corresponding to the input prompt, where the perturbed prompt comprises the replacement token.

With reference to the second aspect, in some implementations, the method includes: for each token of the sequence of tokens, sampling a replacement token from the vocabulary, where the perturbed prompt comprises replacement tokens corresponding to the sequence of tokens.

With reference to the second aspect, in some implementations, intervals of utility scores corresponding to the *N* buckets are of equal width.

With reference to the second aspect, in some implementations, determining the *N* bucket utility scores of the N buckets includes determining a mean of utility scores of tokens assigned to a bucket as a bucket utility score of the bucket.

With reference to the second aspect, in some implementations, sampling the target bucket from the *N* buckets includes sampling the target bucket from the *N* buckets based on an exponential mechanism, where a probability of each bucket of the *N* buckets to be sampled as the target bucket is based on a bucket utility score of the bucket.

With reference to the second aspect, in some implementations, the replacement token is randomly sampled from the target bucket, where tokens in the target bucket have equal probabilities to be sampled as the replacement token.

With reference to the second aspect, in some implementations, determining the utility metric comprises determining a distance metric indicating distances between an embedding of the first token and an embedding of each token in the vocabulary of m tokens.

With reference to the second aspect, in some implementations, the utility metric further includes determining a context metric indicating a contextual relevance of each token of the vocabulary of m tokens in the context of the sequence of tokens in the input prompt; and determining the utility metric based on the context metric and the distance metric.

With reference to the second aspect, in some implementations, the method further includes sending the perturbed prompt to a server running a language model.

According to a third aspect, a method is provided. The method includes receiving an input prompt in a natural language, where the input prompt comprises a sequence of tokens. For a first token of the sequence of tokens: a first utility metric comprising m first utility scores is determined, where the *k^{th}* first utility score *(k =* 1, 2, ... ,*m*) indicates a relevance of the *k^{th}* token in a vocabulary of m tokens with respect to the first token; the vocabulary of m tokens is assigned to *N* buckets based on the first utility scores of the vocabulary of *m* tokens, where each bucket corresponds to an interval of first utility scores; a second utility metric comprising m second utility scores is determined, where the *k^{th}* second utility score is determined based on the *k^{th}* first utility score, a quantity of tokens assigned to the same bucket as the *k^{th}* token in the vocabulary of m tokens, and a noise; a candidate set of tokens is determined, where second utility scores of tokens included in the candidate set are greater than a maximum utility score among the *m* first utility scores; and a replacement token corresponding to the first token is sampled from the candidate set. The method further includes generating a perturbed prompt corresponding to the input prompt, where the perturbed prompt comprises the replacement token.

With reference to the third aspect, in some implementations, the method further includes: for each token of the sequence of tokens, sampling a replacement token from the vocabulary, where the perturbed prompt comprises replacement tokens corresponding to the sequence of tokens.

With reference to the third aspect, in some implementations, the *k^{th}* second utility score decreases with an increase of the quantity of tokens assigned to the same bucket as the *k^{th}* token in the vocabulary of m tokens.

With reference to the third aspect, in some implementations, the noise is generated based on a first exponential distribution.

With reference to the third aspect, in some implementations, the replacement token is sampled from the candidate set based on a second exponential distribution, where a probability of each token in the candidate set to be sampled is determined based on a first utility score of the token.

With reference to the third aspect, in some implementations, intervals of utility scores corresponding to the *N* buckets are of equal width.

With reference to the third aspect, in some implementations, determining a utility metric comprises determining a distance metric indicating distances between an embedding of the first token and an embedding of each token in the vocabulary of *m* tokens.

With reference to the third aspect, in some implementations, the utility metric further includes determining a context metric indicating a contextual relevance of each token of the vocabulary of *m* tokens in the context of the sequence of tokens in the input prompt; and determining the utility metric based on the context metric and the distance metric.

With reference to the third aspect, in some implementations, the method further includes sending the perturbed prompt to a server running a language model.

According to a fourth aspect, one or more non-transitory computer-readable storage media is provided. The one or more non- transitory computer-readable storage media stores one or more instructions that, when executable by one or more computers, cause the one or more computers to perform the method according to the first aspect or one or more implementations of the first aspect, the second aspect one or more implementations of the second aspect, and the third aspect or one or more implementations of the third aspect

According to a fifth aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect, the second aspect one or more implementations of the second aspect, and the third aspect or one or more implementations of the third aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example system having a client device and a server.
FIG. 2 illustrates an example system of generating a perturbed prompt corresponding to an input prompt.
FIG. 3 is a flow diagram of an example process of managing privacy protection of input prompts.
FIG. 4 illustrates example effects of determining utility metrics based on both distance metrics and context metrics.
FIG. 5 illustrates an example system of generating a perturbed prompt corresponding to an input prompt.
FIG. 6 is a flow diagram of an example process of managing privacy protection of input prompts.
FIG. 7 is a flow diagram of an example process of managing privacy protection of input prompts.
FIG. 8 illustrates example effects of sampling replacement tokens by assigning a vocabulary of tokens to buckets.
FIG. 9 is an example computing system.

Like reference numbers and designations in the various drawings indicate like elements.

### DETAILED DESCRIPTION

This document proposes a novel solution to protecting the privacy of user prompts to language models. One or more servers running a language model, for example, a large language model (LLM), can provide an application programming interface (API) that processes user queries and returns generated responses to the queries. The API of the one or more serves can receive user queries (commonly referred to as prompts) from a user through a client device. The prompts from the user may contain sensitive information, for example, personal information or proprietary business information. If the prompts are received by the server running the language model, the sensitive information may be subject to attack and leakage, which may pose threats to user privacy, particularly in light of increasingly stringent data privacy regulations.

Different techniques can be applied to enhance privacy protection of prompts to language models, including but not limited to:
(1) Cryptographic techniques, such as secure multi-party computation (MPC) or homomorphic encryption, can be introduced to run secure inference without leaking user prompts. However, cryptographic techniques may incur heavy computation and large communication overhead. For instance, MPC-based encryption may require about 30 seconds to perform a secure inference on a Bert-base model, which may be too slow to meet some practical needs;
(2) Hardware-based solutions, such as trusted execution environment (TEE), can provide capabilities of running inference on the server side without leaking the plaintext information of user prompts. However, hardware-based solutions may be inefficient, and may not provide protection again side-channel attacks; and
(3) Differential privacy (DP)-based solutions can offer a quantifiable privacy-utility trade-off with high efficiency, without incurring too much overhead to the inference procedure. In some cases, exponential mechanisms are utilized to perturb the discrete tokens of the prompt to provide privacy protection.

The present disclosure discloses techniques to improve the trade-off between utility and privacy, for example, when applying DP-based solutions to protect the privacy of user prompts. In some implementations, a prompt received from a user by the client device (referred to as an input prompt) includes a sequence of tokens. For each token (*tᵢ*, *i* = 1, 2, 3, ...) in the sequence of tokens of the input prompt, a language model (e.g., a small language model) deployed at the client device can sample a replacement token of *tᵢ* from a vocabulary (V), and generate a perturbed prompt by concatenating replacement tokens corresponding to the sequence of tokens. In some implementations, the replacement token can be sampled from V based on an exponential mechanism, where a probability of each token (*t'*) of *V* being sampled as the replacement token can be determined based on a utility score of the *t'* with respect to *tᵢ*.

In some implementations, the utility score of each t' in *V* can be determined based on a distance between an embedding of *t'* and an embedding of *tᵢ*, and a context logit of t' in the context of the input prompt. By considering both the distance and the context logit, the replacement token can be sampled from *V* with less utility loss, compared to the scenario where only the distance is considered.

In some implementations, the tokens in *V* can be assigned to buckets according to utility scores of the tokens. Each bucket can correspond to an interval of utility scores. Instead of sampling the replacement token directly from *V*, the replacement token can be sampled based on the buckets, which can increase the overall utility of the perturbation process. For example, bucket utility scores can be determined based on utility scores of tokens assigned to the buckets, and a target bucket can be sampled from the buckets based on the bucket utility scores. The replacement token can then be sampled from the target bucket. For another example, a second utility score of each *t'* in *V* can be determined based on the original utility score, a quantity of tokens assigned to the same bucket as *t*', and a noise. A candidate set of tokens can then be determined based on the second utility scores, and a replacement token can be sampled from the candidate set.

The described techniques can achieve one or more technical benefits/advantages. For example, a utility function that takes contextual relevance into consideration can achieve a better privacy-utility trade-off, for example, when applying DP-based solutions to protect the privacy of user prompts. The utility can be higher under the same privacy budget. For another example, the described techniques can reduce the long-tail phenomenon in natural language processing, and increase the overall performance of the perturbation process based on DP. In some implementations, different or additional advantages can be achieved.

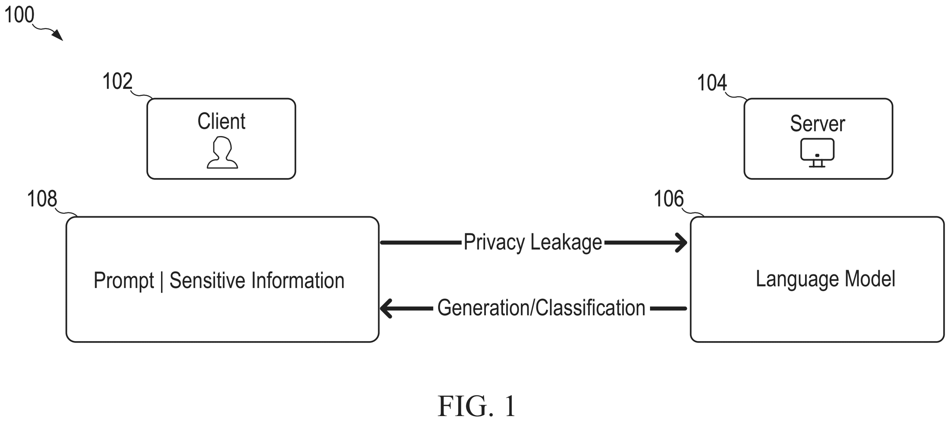

FIG. 1 is a diagram of an example system 100 having a client device 102 and a server 104. The system 100 can be an example of a computing environment in which privacy-protection techniques provided in the present disclosure can be implemented.

The system 100 includes a client device 102 and a server 104. The server 104 can be an application service platform providing one or more cloud-based applications and/or services to support one or more web-enabled native applications on the client device 102. The applications/services provided by the server 104 may include but are not limited to conversational query and analysis, information classification and/or generalization, presentation applications, word processing applications, web site authoring applications, collaboration platforms, communications platforms, and/or other types of applications in which users may create, view, and/or modify various types of electronic content. As shown in FIG. 1, the server 104 can utilize a language model 106 to provide at least a portion of the applications/services. Additional details of the language model 106 are discussed in detail below. The client device 102 and the server 104 communicate via network connection. The network may be a combination of one or more public and/or private networks and may be implemented at least in part by the Internet.

In some implementations, the client device 102 can be a computing device that may be implemented as a portable electronic device, such as a mobile phone, a tablet computer, a laptop computer, a portable digital assistant device, a portable game console, and/or other such device. The client device 102 can also be implemented in computing devices having other form factors, such as a desktop computer, vehicle onboard computing system, a kiosk, a point-of-sale system, a video game console, and/or other types of computing devices in other implementations. While the example implementation illustrated in FIG. 1 includes a single client device 102, other implementations may include a different number of client devices that utilize services provided by server 104.

The server 104 can receive requests from the client device 102, and process the requests. In some implementations, a request can be a prompt 108 received from a user via the client device 102. The prompt 108 can instruct the language model 106 to generate a response or perform a specific task. For example, the prompt 108 can include information that helps the language model 106 to understand the context, intent, and desired output and/or guides the AI's behavior and shapes its response. The requests may include but are not limited to requests to create, view, and/or modify various types of electronic content and/or obtain templates for creating and/or modifying the electronic content.

The language model 106 can be a machine learning model trained to generate content in response to a prompt 108 received from the client device 102. The prompt 108 can be in a natural language. In a non-limiting example, the generated content may include one or more sentences or paragraphs of textual content on a particular topic included in the prompt 108, structured or semi-structured instructions for rendering a slide or slides for a presentation, a spreadsheet, a chart, and/or other types of textual content. In some implementations, the language model 106 can be implemented using a large language model (LLM), such as Generative Pre-trained Transformer 3 (GPT3), or GPT4 model. Other implementations may utilize other models or other generative models to generate the content in response to a prompt 108 received from a user via the client device 102.

In some implementations, the prompt 108 received from a user via the client device 102 may include sensitive information, such as propriety business information, personal or private information, etc. In some cases, by sending the prompt received from the user (also referred to as an input prompt) directly to the server 104, sensitive information included in the input prompt may be at the risk of privacy leakage. For example, the server 104 can be subject to attack by adversaries, and the sensitive information in the input prompt, if received by the server 104, may be leaked to the adversaries. To protect the privacy of input prompts, when receiving an input prompt, the client device 102 can generate a perturbed prompt corresponding to the input prompt, and send the perturbed prompt to the server 104. The perturbed prompt can be a modified version of the input prompt, where certain words, phrases, or structures are intentionally altered to protect sensitive information while still retaining the overall meaning of the original input. In some implementations, a small language model can be deployed at the client device 102 to generate a slight variation of the input prompt as the perturbed prompt, e.g., by adding noise to tokens in the input prompt.

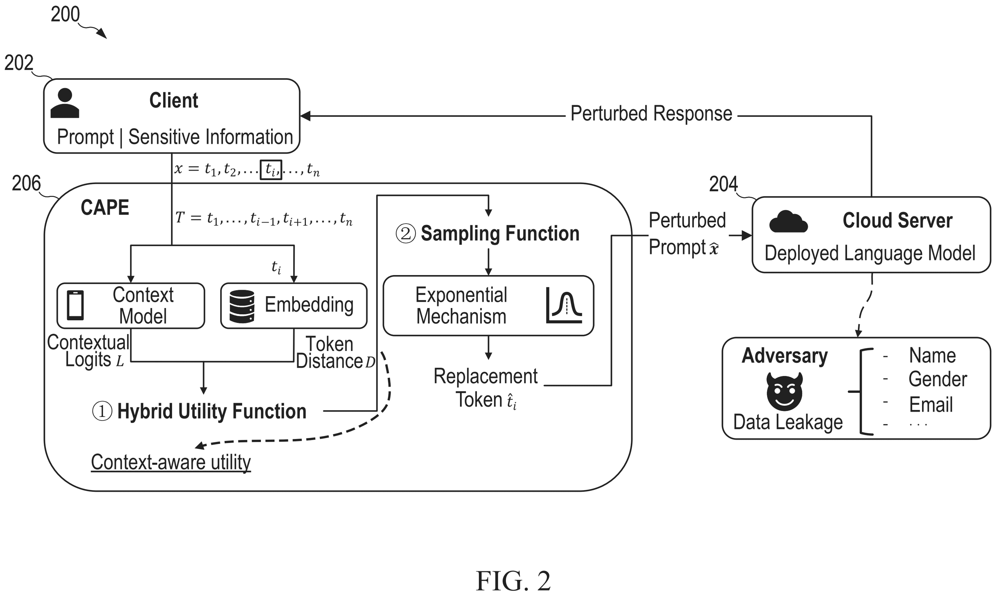

FIG. 2 illustrates an example system 200 of generating a perturbed prompt corresponding to an input prompt. System 200 can be an example of the system 100 of FIG. 1.

The system 200 can include a client device 202 running a device model 206, for example, a small language model such as a context-aware position embedding (CAPE) model, a Bert-base model, etc. The system 200 further includes a server 204 running a language model (e.g., a large language model) that can generate content in response to a prompt received from the client device 202. The server 204 may be one or more cloud servers where the large language model is deployed. In some cases, the server 204 may be subject to attack from adversaries. Sensitive information (e.g., personal information such as name, gender, or email address), if received by the server 204, may be at risk of being leaked to the adversaries. To protect the sensitive information in the input prompt, the device model 206 can generate a perturbed prompt corresponding to the input prompt, so that the client device 202 can send the perturbed prompt to the server 204, instead of sending the input prompt. The server 204 running the large language model can generate content based on the perturbed prompt, and send a response to the client device including the generated content.

As shown in FIG. 2, the client device 202 can receive an input prompt (denoted as x) from a user. In some implementations, the input prompt can be a textual prompt comprising words and phrases in a natural language comprising words and phrases. The input prompt can include a sequence of tokens {*t*₁, *t*₂, ... , *tₙ*}*.* In some implementations, the client device 202 can parse the input prompt into a sequence of tokens {*t*₁, t₂, ... , *tₙ*}, where each token can be algorithmically constructed to represent textual elements like words, sub-words, or symbols in the input prompt.

In some implementations, at least one of the tokens are replaced to generate a perturbed prompt for privacy protection. In some implementations, for each token *tᵢ (i* = 1, 2, ..., *n*) in the sequence of tokens of the input prompt, the client device 202 can determine a replacement token ( $\hat{{t}_{ι}}$) of the token *tᵢ*, so that the client device 202 can generate a perturbed prompt by concatenating replacement tokens of the sequence of tokens. The replacement token ( $\hat{{t}_{ι}}$) can be sampled from a vocabulary (V) of tokens utilized by the device model 206. For example, the vocabulary of the device model 206 can include tens of thousands to hundreds of thousands of tokens (e.g., 30,000-50,000 in models like GPT2). For ease of illustration, the vocabulary (V) utilized by the device model 206 includes m tokens, where m is a positive integer.

In some implementations, the replacement token can be sampled from the vocabulary (V) based on an exponential mechanism (R). The exponential mechanism (EM) can be a differential privacy algorithm that selects an output by sampling from a probability distribution weighted by a utility function. For example, the exponential mechanism can introduce randomness by probabilistically generating outputs. Instead of selecting the output with the highest utility, the exponential mechanism can assign probabilities to all possible outputs, where outputs having higher utility are exponentially more likely to be selected, outputs with lower utility scores are exponentially less likely to be chosen, but none of the possible outputs has zero probability. In some implementations, the randomness introduced by the exponential mechanism can ensure that an adversary cannot reverse-engineer the output to determine the input data, which may contain sensitive information.

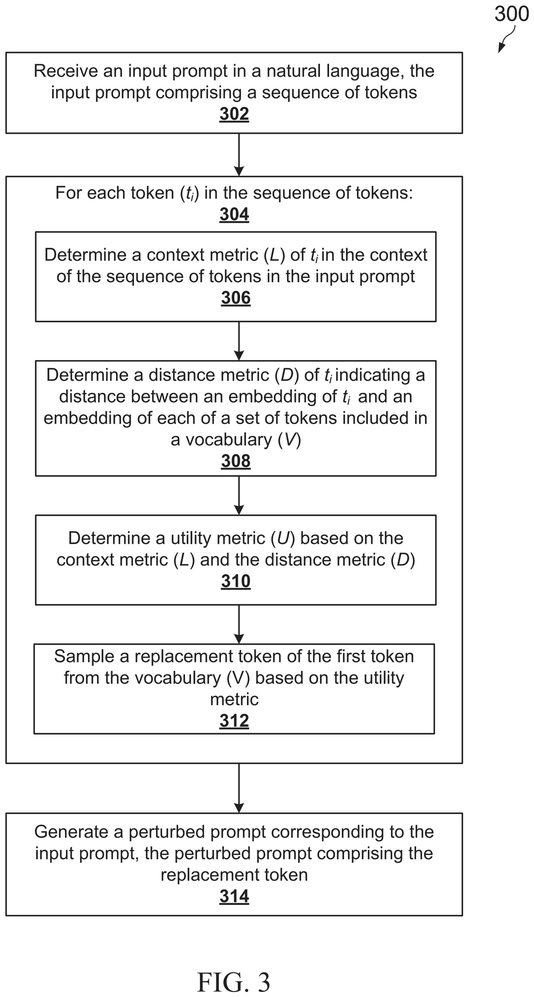

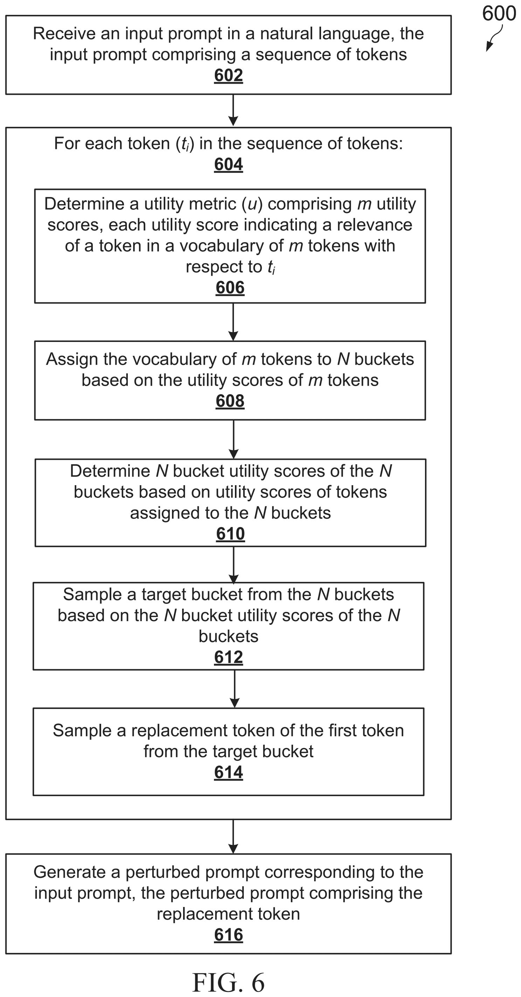

In some implementations, the probability of each token (*t'*) in the vocabulary (V) can be determined based on a utility score of *t*'. Utility score of *t'* can indicate a relevance (e.g., semantic relevance) of t' in the vocabulary with respect to *tᵢ*. For example, as explained in detail below with reference to FIG. 6, the utility score of each token (*t'*) can be determined based on a distance between an embedding of *t*' and an embedding of *tᵢ*. For another example, as explained in detail below with reference to FIG. 2 and FIG. 3, the utility score of each token (*t'*) can be determined based on a context logit or metric of *t*' replacing *tᵢ* in the context of the input prompt. The context logit of *t'* can indicate a contextual relevance of *t'* in the context of the input prompt. It should be noted that the utility score of each *t'* can be determined based on a combination of one or more of the distance between an embedding of *t'* and an embedding of *tᵢ*, the context metric of t' replacing *tᵢ* in the context of the input prompt, or additional and/or different metrics.

In some implementations, as shown in FIG. 2, for each token *tᵢ (i* = 1, 2, ..., *n*) in the sequence of tokens of the input prompt, an embedding layer of the device model 206 can determine a distance metric (*̅D̅*̅) *of tᵢ*, and a context model of the device model 206 can determine a context metric (*̅L̅*̅) of *tᵢ*. The context model may be a bi-directional model, such as a Bert-base model, or a unidirectional model, such as a GTP-2 model. For example, *̅D̅*̅ can be a *m*-dimensional vector, where each element in *̅D̅*̅ can be a distance between of an embedding of a token in the vocabulary of m tokens and an embedding of *tᵢ*. *̅L̅*̅ can be a m-dimensional vector, where each element in *̅L̅*̅ can be a context logic of a token in the vocabulary of m tokens in the context of the input prompt. The device model 206 can determine a utility metric (*̅U̅*̅) of *tᵢ* based on *̅L̅*̅ and *D̅. U̅* can be a m-dimensional vector, where each element in *̅U̅*̅ can be a utility score of a token in the vocabulary of m tokens.

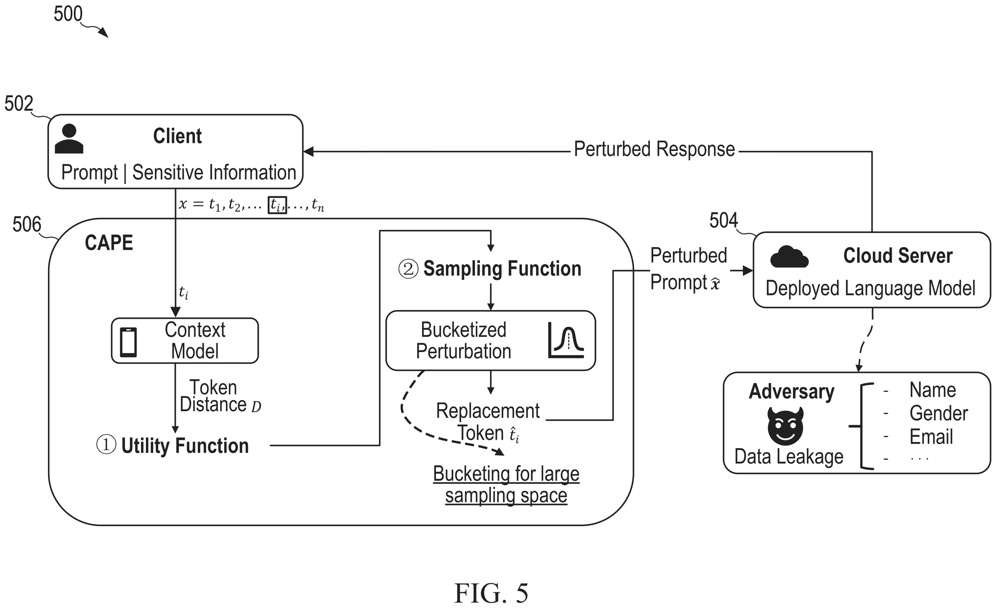

Further, the device model 206 can invoke a sampling function, and sample a token from the vocabulary (*V*) as the replacement token ( $\hat{{t}_{ι}}$) of *tᵢ*. The probability of each token (*t'*) in V being sampled as $\hat{{t}_{ι}}$ can be determined based on the utility score of *t'*. In some implementations, as shown in FIG. 2 and explained in detail with reference to FIG. 3, the replacement token can be sampled from V based on an exponential mechanism. In some implementations, as explained in detail with reference to FIGS. 5-7, the replacement taken be sampled from V based on bucketized perturbation. It should be noted that the replacement token can be sampled from V based on any suitable mechanism that introduces randomness to the sampling (e.g., other sampling mechanisms based on differential privacy).

Algorithm 1 describes an example process for generating *̅U̅*̅ for *tᵢ* based on *̅L̅*̅ and *D̅.*

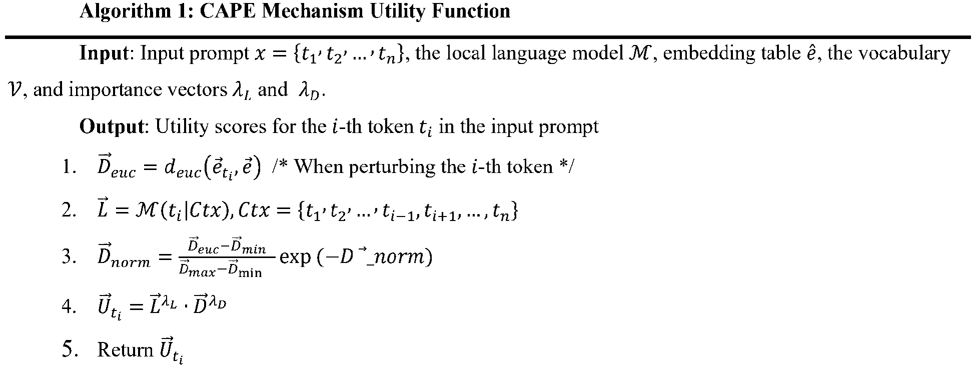

FIG. 3 is a flow diagram of an example process 300 of managing privacy protection of input prompts. The example process 300 can be implemented by a client device (e.g., the client device 102 of FIG. 1, or the client device 202 of FIG. 2), for example, by a device model deployed at the client device. The operations shown in process 300 may not be exhaustive and other operations can be performed as well before, after, or in between any of the illustrated operations. Further, some of the operations may be performed simultaneously, or in a different order than shown in FIG. 3. In some implementations, some of the operations may be omitted. For example, in some instances, not every token in the sequence of tokens of the input prompt is replaced in the perturbed prompt. As another example, in some instances, for some token, step 306 or 308 can be omitted and a utility metric (*̅U̅*̅) in step 310 can be determined based on only one of a context metric (*̅L̅*̅) or a distance metric (*̅D̅*̅)*.*

At 302, an input prompt in a natural language is received. In some implementations, the input prompt can be received by the client device from a user of the client device. The input prompt (x) can include a sequence of tokens, e.g., *x =* {*t*_{1'}, *t*₂, *...* , *tₙ*}*.* In some implementations, a tokenizer of the client device can parse the input prompt into the sequence of tokens.

At 304, a replacement token ( $\hat{{t}_{ι}}$) is selected, from a vocabulary (V) of m tokens utilized by the device model deployed at the client device, for each token (*tᵢ*, *i* = 1, 2, ... , *n*) in the sequence of tokens of the input prompt. The replacement token can be semantically similar to *tᵢ*, and can have similar contextual relevance as *tᵢ* in the context of the input prompt. Specifically, step 304 includes steps 306 to 312.

At 306, a context metric (*̅L̅*̅) of *tᵢ* is determined in the context of the sequence of the tokens in the input prompt. The context metric (*̅L̅*̅) can be a m-dimensional vector *̅L̅*̅ = [*l*₁, *l*₂, ... , *lₘ*]*,* where *lₖ (k =* 1, 2, ..., m) can be a context logit of the *k^{th}* token (*t'*) in *V* in the context of the input prompt. The context logit can indicate a contextual relevance of *t'* in replacement of *tᵢ* in the context of the input prompt. *̅L̅*̅ can be determined by a context model of the device model.

In some implementations, the context model can be a bi-directional model, such as a Bert-based model. The Bert-based model can determine *̅L̅*̅ based on both preceding information and subsequent information with respect to *tᵢ* in the context of the input prompt. For example, the *tᵢ* can be replaced with a mask token to generate a second sequence of tokens {*t*₁, *t*₂, ... , *t*_{*i*-1}, [*MASK*], *t*_{*i*+1}, ... , *tₙ*} as context (e.g., Ctx in Algorithm 1 and Algorithm 3). The second sequence of tokens can be sent to the Bert-based model as input, where the input has a batch size of l and a sequence length of n (the quantity of tokens in the second sequence).

The Bert-base model can run forward propagation on the second sequence of tokens, and obtain a context logit of the mask token indicating a contextual relevance of the mask token in the context of the second sequence of tokens. For example, the context model can compute the context logit for every possible token in *V* at each position in the second sequence, and obtain an n*m dimensional matrix, where m is the size of *V* and *n* is the quantity of tokens in the second sequence. The context logits in the matrix can represent the probabilities for each token in *V* being the correct prediction for that position. For instance, the *k^{th}* column *(k =* 1,2, ..., m) of the matrix can represent the context logits of the *k^{th}* token in V at each position in the second sequence, and the *g^{th}* row (*g =* 1, 2, ... , *n*) of the matrix can represent the context logits of each token in *V* at the *g^{th}* position of the second sequence. As such, the *i^{th}* row of the matrix can be output as *̅L̅*̅, which can represent context logits of each token in *V* at the masked position of the second sequence.

In some implementations, a subset of the tokens in the input prompt can be used as input to the Bert-based model. For example, *p* tokens preceding *tᵢ* and *q* tokens subsequent to *tᵢ* can be used as input: {*tᵢ₋ₚ,* ... , *t*_{*i*-2}, *t*_{*i-*1}, [*MASK*], *t*_{*i*+1}, *t*_{*i*+1}, ... , *t*_{*i*+*q*}}, where 1 ≤ p ≤ *i* - 1, and 1 ≤ *q* ≤ *n - i.* The Bert-based model can compute context logits for all tokens in V at the i-th position, and generate *̅L̅*̅ including the context logics. For example, the *k^{th}* element in *̅L̅*̅ can represent a possibility of the *k^{th}* token in *V* being the correct prediction for the i-th position.

In some implementations, the context model can be a uni-directional model, such as a GPT2-base model. The GPT2-based model can determine *̅L̅*̅ based on the preceding information with respect to *tᵢ* in the context of the input prompt. For example, preceding tokens {*t*_{1'}, t₂, ... , *t*_{*i*-1}} can be used as context and sent to the GPT2-based model as input, where the input has a batch size of 1 and a sequence length of *(i* - 1). In some implementations, a subset of all the tokens (e.g., p tokens, *p* ≤ *i* - 1) preceding *tᵢ* can be used as an input. The GPT2-based model can compute context logits for all tokens in *V* at the next position, i.e., i-th location, and generate *̅L̅*̅ including the context logics. For example, the *k^{th}* element in *̅L̅*̅ can represent a possibility of the *k^{th}* token in *V* being the correct prediction for the next position.

In some implementations, the context model can be another uni-directional model that determine *̅L̅*̅ based on subsequent information with respect to *tᵢ* in the context of the input prompt. For example, subsequent tokens {*t*_{*i*+}*₁, t*_{*i+*2}, ... , *t*_{*i*+*q*}}, where the input has a batch size of 1 and a sequence length of *q. q* is the number of token following *tᵢ* in the input prompt used as an input to the model. The model can compute context logits for all tokens in *V* at the preceding position, i.e., i-th location, and generate *̅L̅*̅ including the context logics. For example, the *k^{th}* element in *̅L̅*̅ can represent a possibility of the *k^{th}* token in *V* being the correct prediction for the i-th position.

At 308, a distance metric (*̅D̅*̅) of *tᵢ* is determined, e.g., by an embedding layer of the device model. *̅D̅*̅ indicates a distance between an embedding of *tᵢ* and an embedding of each token in *V. D̅* can be a m-dimensional vector, where each element in *̅D̅*̅ can indicate a distance between an embedding of a token (*t'*) in *V* and an embedding of *tᵢ*. The distance can be a Euclidean distance or another distance metric that measures a difference or similarity between two embeddings.

For example, the device model can obtain embeddings of *tᵢ* and all tokens t' in *V,* and compute the Euclidean distance metric (*D̅_{euc}*) between the embedding of each all tokens t' in V and the embedding of *tᵢ. D̅_{euc}* = *d_{euc}*(*tᵢ, t')* for each t' ∈ *V. D̅_{euc}* can be a m-dimensional vector *D̅_{euc} =* [*d*₁, *d*₂, ... , *dₘ*], where *dₖ (k =* 1, 2, ... ,*m*) can be an Euclidean distance between an embedding of the *k^{th}* token in *V* and the embedding of *tᵢ.*

In some implementations, *D̅_{euc}* can be normalized into ${\vec{D}}_{norm} = \left[{d}_{1}^{′},{d}_{2}^{′},…,{d}_{m}^{′}\right]$ where ${d}_{k}^{′} = \frac{{d}_{k} - {d}_{min}}{{d}_{max} - {d}_{min}}$, k = 1,2, ..., *m*), *dₘᵢₙ* is the minimum distance among *d*₁, *d*₂, ... , *dₘ,* and *dₘₐₓ* is the maximum distance among *d*₁, *d*₂, ... , *dₘ*. *̅D̅*̅ can be computed based on *D̅ₙₒᵣₘ,* $\vec{D} = \left[{d}_{1}^{"},{d}_{2}^{"},…,{d}_{m}^{"}\right]$, where ${d}_{k}^{"} = exp \left(-{d}_{k}^{′}\right)$. ${d}_{k}^{"}$ can be a distance score of the *k^{th}* token in *V.* The distance score ${d}_{k}^{"}$ can be negatively correlated with the Euclidean distance.

At 310, a utility metric (*̅U̅*̅) of *tᵢ* is determined based on *̅L̅*̅ and *D̅. U̅* can be a m-dimensional vector *̅U̅*̅ = [*u*₁, *u*₂, ... , *uₘ*], where *uₖ (k =* 1, 2, ... , *m*) can be a utility score of the *k^{th}* token in *V* indicating a relevance (e.g., semantic relevance) of the *k^{th}* token in V with respect to *tᵢ*. For example, *̅U̅*̅ = *L̅^{λ^{L}}* . *D̅^{λ^{D}},* where *λ_{L}* is a weight of *̅L̅*̅ and *λ_{D}* is a weight of *D̅,* where the *k^{th}* element in *̅U̅*̅ is generated based on a weighted product of the *k^{th}* element in the first vector and the *k^{th}* element in the second vector. In other words, ${u}_{k} = {{l}_{k}}^{{λ}_{L}} ⋅ {d}_{k}^{{"}^{{λ}_{D}}}$. In some implementations, *λ_{L}* is different from *λ_{D}*. In some implementations, *λ_{L}* and *λ_{D}* can be configured based on a preference over the context or distance metric, or based on as experiments or other criteria for better performance. In some implementations, the *λ_{L}* and *λ_{D}* can be the same or different for different tokens. In some implementations, the step 310 can be implemented according to example Algorithm 1 or a variant thereof.

At 312, a replacement token of *tᵢ* is sampled from *V* based on *̅U̅*̅. In some implementations, the device model can invoke a standard exponential mechanism to sample $\hat{{t}_{i}}$ from *V*. The sampling probabilities of the *k^{th}* token (*t'*) in V can be determined based on *uₖ*, e.g., computed as: $p \left[R\left({t}_{i}\right)=t′\right] = \frac{exp \left(\frac{ϵ}{2 Δ}u\left({t}_{i},t′\right)\right)}{{\sum }_{j = 1}^{m} \left(\frac{ϵ}{2 Δ}u\left({t}_{i}, {t}_{j}\right)\right)}$
where *ε* is the privacy budget, and sensitivity Δ= max|*u*(*t*, *t'*) - *u*(*t, t*")|, where t represents any token in the input prompt, and t' and *t*" represent any two tokens in *V.* A higher utility score (*uₖ*) indicates a higher probability of the *k^{th}* token to be sampled as the replacement token ( $\hat{{t}_{i}}$).

In some implementations, the device model can invoke an exponential mechanism based on bucketized perturbation to sample $\hat{{t}_{i}}$ from *V*, as explained in detail with reference to FIGS. 6-8. In some implementations, the device model can invoke other differential-privacy mechanisms to sample $\hat{{t}_{i}}$ from *V*, such as report noisy max with exponential noise, permute-and-flip, etc. In some cases, the probability distribution may be different by invoking different sampling mechanisms.

At 314, after sampling a replacement token of each token in the sequence of tokens of the input prompt, a perturbed prompt (*x̂*) corresponding to the input prompt can be generated. The perturbed prompt can be generated by replacing the original token *tᵢ* with its replacement token of $\hat{{t}_{i}}$. In some implementations, if each token in the sequence of tokens of the input prompt is replaced, the perturbed prompt can be generated by concatenating the replacement token of each token in the sequence of tokens of the input prompt, e.g., $\hat{x} = \hat{x} + \hat{{t}_{i}}$.

In some implementations, the client device can use the perturbed prompt as an input to a large language model. In some implementations, the large language model can be run on the client device or a server. In the latter case, the client device can send the perturbed prompt to a server running the large language model, instead of sending the input prompt to the server.

In some implementations, process 300 can provide a quantifiable privacy as: $\frac{ℙ \left[R\left({t}_{1}\right)=t′\right]}{ℙ \left[R\left({t}_{2}\right)=t′\right]} \leq {e}^{ϵ}$*.* In other words, under differential privacy with a privacy budget of *ε*, adjacent tokens *t*₁ and *t*₂ can be randomized to the same output token *t*' with indistinguishable probability. As such, the server cannot effectively deduce the input prompt x given the perturbed prompt *x̂*.

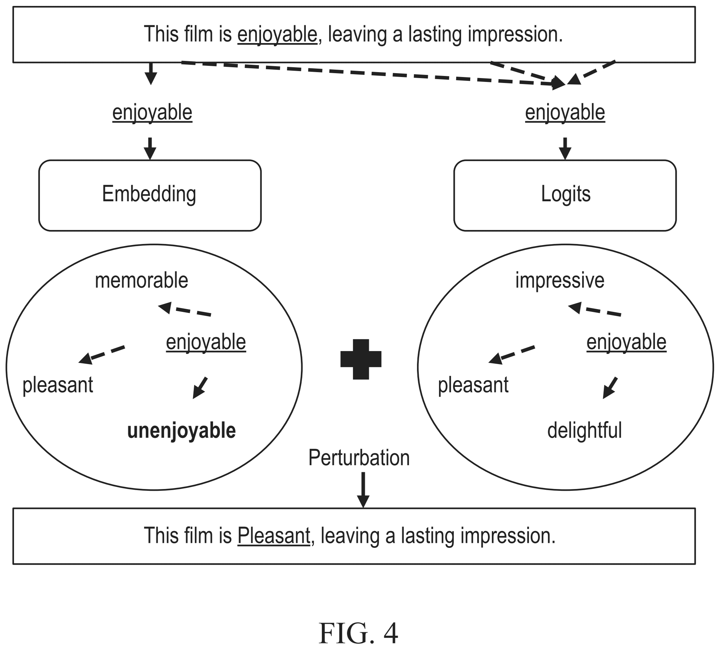

FIG. 4 illustrates example effects of determining utility metrics based on both distance metrics and context metrics. In some implementations, by considering both the distance metric and the context metric, the device model 206 can sample the replacement token from *V* with less utility loss, compared to the scenario where only the distance metric is considered. By considering context information, the utility metric can better reflect the relevance of the replacement token to both the corresponding token, and to the context of the input prompt. If only the distance metric is considered, the sampled replacement token may have a close embedding distance to the original token, but may have low semantic relevance to the context.

For example, as shown in FIG. 4, suppose the input prompt is "The film is enjoyable, leaving a lasting impression", where "enjoyable" can be a token. While "unenjoyable" has a close embedding distance to "enjoyable", it is semantically opposite to "enjoyable". By taking both the embedding distance and contextual information (e.g., "leaving a lasting impression") into consideration, "pleasant", which has higher contextual relevance, is more likely to be sampled as the replacement token of "enjoyable", and a better result can be output by the language model using this replacement token.

FIG. 5 illustrates an example system 500 of generating a perturbed prompt corresponding to an input prompt. System 500 can be an example of the system 100 of FIG. 1. Similar to the system 200, the system 500 can include a client device 502 running a device model 506, for example, a small language model such as a context-aware position embedding (CAPE) model, a Bert-base model, etc. The system 500 further includes a server 504 running a language model (e.g., a large language model) that can generate content in response to a prompt received from the client device 502. The server 504 may be one or more cloud servers where the large language model is deployed. To protect the sensitive information in the input prompt, the device model 506 can generate a perturbed prompt corresponding to the input prompt, so that the client device 502 can send the perturbed prompt to the server 504, instead of sending the input prompt. The server 504 running the large language model can generate content based on the perturbed prompt, and send a response to the client device including the generated content.

As shown in FIG. 5, the client device 502 can receive an input prompt (denoted as x) from a user. The input prompt can include a sequence of tokens {*t*₁, t₂, ... , *tₙ*}*.* For each token *tᵢ (i* = 1, 2, ..., *n*) the input prompt, the client device 502 can determine a replacement token ( $\hat{{t}_{i}}$) of the token *tᵢ*, so that the client device 502 can generate the perturbed prompt by concatenating replacement tokens of the sequence of tokens. The replacement token ( $\hat{{t}_{i}}$) can be sampled from a vocabulary (*V*) of tokens utilized by the device model 506. For ease of illustration, the vocabulary (*V*) utilized by the device model 506 includes m tokens, where m is a positive integer.

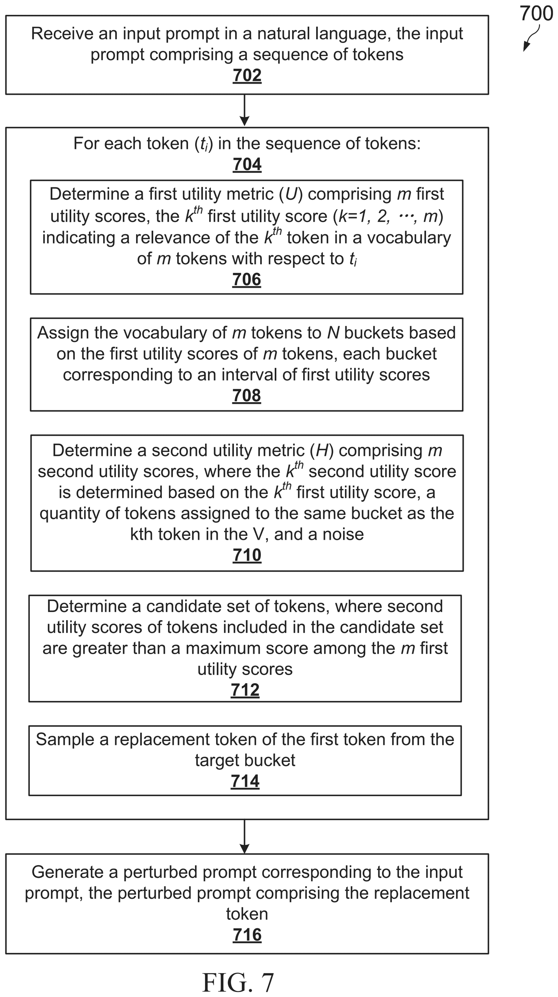

Different from FIG. 2, in some implementations, the replacement token can be sampled from the vocabulary (*V*) based on bucketized perturbation. In some implementations, as explained in detail with reference to FIG. 6, the device model 506 can assign tokens in *V* to N buckets, sample a target bucket from the N buckets, and sample the replacement token from the target bucket. In some implementations, as explained in detail with reference to FIG. 7, the device model 506 can assign tokens in *V* to N buckets, determine a candidate set of tokens based on utility scores of the tokens and a quantity of tokens assigned to each bucket, and sample the replacement token from the candidate set of tokens.

Algorithm 2 describes an example process for assigning tokens in *V* in buckets. Algorithm 3 describes an example process of generating a perturbed prompt based on sampling a replacement token from buckets. Algorithm 4 describes another example process of generating a perturbed prompt based on sampling a replacement token from the buckets according to a Permute-and-Flip (PF) mechanism.

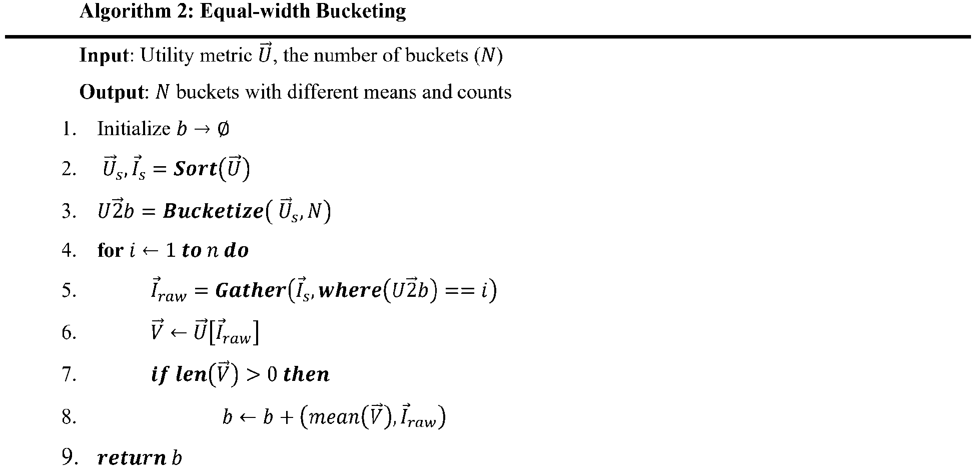

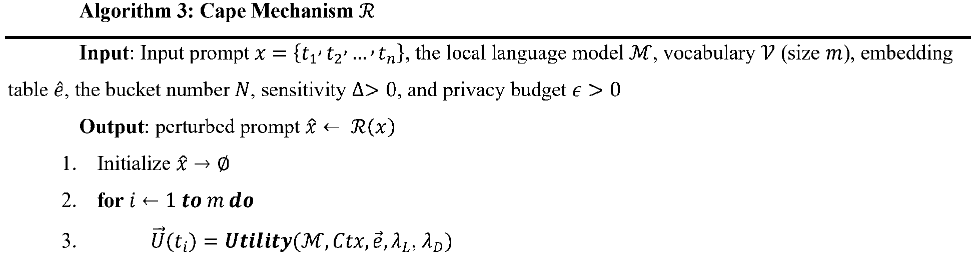

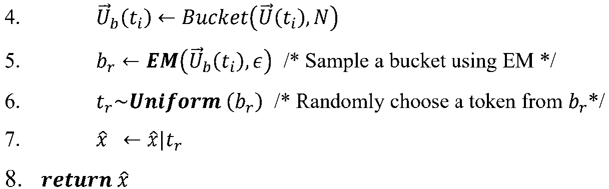

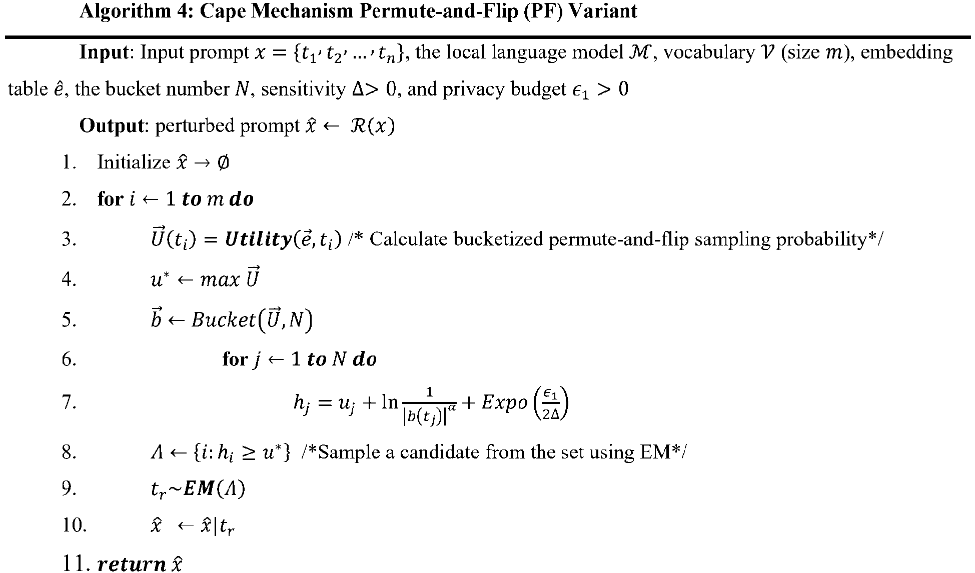

FIG. 6 is a flow diagram of an example process 600 of managing privacy protection of input prompts. The example process 600 can be implemented by a client device (e.g., the client device 102 of FIG. 1, or the client device 502 of FIG. 5), for example, by a device model deployed at the client device. In some implementations, the example process 600 can be implemented according to example Algorithm 3 or a variant thereof. The operations shown in process 600 may not be exhaustive and other operations can be performed as well before, after, or in between any of the illustrated operations. Further, some of the operations may be omitted, performed simultaneously, or performed in a different order than shown in FIG. 6.

At 602, an input prompt in a natural language is received. In some implementations, the input prompt can be received by the client device from a user of the client device. The input prompt (x) can include a sequence of tokens, e.g., *x =* {*t*₁, t₂, ... , *tₙ*}*.* In some implementations, a tokenizer of the client device can parse the input prompt into the sequence of tokens.

At 604, a replacement token ( $\hat{{t}_{i}}$) is selected, from a vocabulary (*V*) of m tokens utilized by the device model deployed at the client device, for each token (*tᵢ, i* = 1, 2, ... , *n*) in the sequence of tokens of the input prompt. The replacement token can be semantically similar to *tᵢ*, and/or can have similar contextual relevance as *tᵢ* in the context of the input prompt. Specifically, step 604 includes steps 606 to 612.

At 606, a utility metric (*̅U̅*̅) of *tᵢ* is determined. *̅U̅*̅ can be a m-dimensional vector *̅U̅*̅ = [*u*₁, *u*₂, ... , *uₘ*], where *uₖ (k =* 1, 2, ..., m) can be a utility score of the *k^{th}* token in V indicating a relevance (e.g., semantic relevance) of the *k^{th}* token with respect to *tᵢ*.

In some implementations, *̅U̅*̅ can be determined based on embedding distances of tokens in V with respect to *tᵢ*, for example, according to the techiqnues described with respect to step 308 of FIG. 3. For example, a distance metric (*̅D̅*̅) of *tᵢ* can be determined by an embedding layer of the device model. *̅D̅*̅ can be a m-dimensional vector, where each element in *̅D̅*̅ can indicate a distance between an embedding of a token (*t'*) in V and an embedding of *tᵢ*. For example, the device model can obtain embeddings of *tᵢ* and all tokens t' in V, and compute the Euclidean distances between the embedding of each token (*t'*) in *V* and the embedding of *tᵢ*, where *D̅_{euc}* = *d_{euc}*(*tᵢ, t')* for each t' ∈ *V. D̅_{euc}* can be a m-dimensional vector *D̅_{euc} =* [*d*₁, *d*₂, ... , *dₘ*], where *dₖ (k* = 1, 2, ..., m) can be an Euclidean distance between an embedding of the *k^{th}* token in *V* and the embedding of *tᵢ. D̅_{euc}* can be normalized into ${\vec{D}}_{norm} = \left[{d}_{1}^{′},{d}_{2}^{′},…,{d}_{m}^{′}\right]$, where ${d}_{k}^{′} = \frac{{d}_{k} - {d}_{min}}{{d}_{max} - {d}_{min}}$, *dₘᵢₙ* is the minimum distance among *d*₁, *d*₂, ..., *dₘ*, and *dₘₐₓ* is the maximum distance among *d*₁, *d*₂, ..., *dₘ* . *̅D̅*̅ can be computed based on *D̅ₙₒᵣₘ* , *D̅ =* $\left[{d}_{1}^{"},{d}_{2}^{"},…,{d}_{m}^{"}\right]$, where ${d}_{k}^{"} = - {d}_{k}^{′}$. ${d}_{k}^{"}$ can be a distance score of the *k^{th}* token in *V.* The distance score ${d}_{k}^{"}$ can be negatively correlated with the Euclidean distance.

In some implementations, *̅U̅*̅ can be determined based on a context metric (*̅L̅*̅) of tokens in V with respect to *tᵢ*, for example, according to the techiqnues described with respect to step 306 of FIG. 3. In some implementations, *̅U̅*̅ can be determined based on a distance metric (*̅D̅*̅) and a context metric (*̅L̅*̅)*,* according to the techniques described with respect to steps 306 to 310 of FIG. 3. For example, *̅U̅*̅ = *L̅^{λ^{L}}* . *D̅^{λ^{D}}*, where *λ_{L}* is a weight of *̅L̅*̅ and *λ_{D}* is a weight of *̅D̅*̅. In some implementations, *̅U̅*̅ can be determined based on additional or different metrics.

At 608, the *V* of m tokens are assigned to *N* buckets {*b*₁, *b*₂, ... , *b_{N}*} based on utility scores of the m tokens. In some implementations, utility scores (*u*) in *̅U̅*̅ can be sorted and then equal width bucketing algorithm (e.g., Algorithm 2) can be applied to assign the m tokens into *N* buckets. For example, utility scores (*u*) in *̅U̅*̅ can be sorted from small to large, and then assigned to *N* buckets, each corresponding to an interval of utility scores. For example, the first bucket corresponds to an interval of [*u*₁, *u*₂), the second bucket corresponds to an interval of [*u*₂, *u*₃)*,* and so on. In some implementations, the *N* buckets are of equal width, that is, intervals of utility scores corresponding to the *N* buckets are of equal width (e.g., a difference between two endpoint values of each interval is the same). The width of each bucket can be $\frac{{u}_{max} - {u}_{min}}{N}$, where *uₘₐₓ* is the maximum score among *u*₁, *u*₂, ... , *uₘ*, and *uₘᵢₙ* is the minimum score among *u*₁, *u*₂, ..., *uₘ.* Each token in *V* can be assigned to a bucket, where the utility score of the token falls within the interval of utility scores corresponding to the bucket. In some implementations, other bucketing algorithms (e.g., equal number bucketing) can be applied to assign the m tokens into *N* buckets based on the utility scores (*u*) in *U̅.*

At 610, *N* bucket utility scores (*u_{b}*) of the *N* buckets are determined based on utility scores of tokens assigned to the N buckets. A bucket utility scores (*u_{b}*) of a bucket is a utility score assigned to the bucket. In some implementations, *u_{b}* of a bucket can be determined as a mean of utility scores of tokens assigned to the bucket: ${u}_{b , j} = {\sum }_{k = 1}^{\left|{b}_{j}\right|} \frac{{u}_{j , k}}{\left|{b}_{j}\right|}$
where *j* = 1, 2, *..., N,* |*bⱼ*| is a quantity of tokens in the *j^{th}* bucket, *u_{j,k}* is the utility score of the *k^{th}* token assigned to the *j^{th}* bucket. In some implementations, *u_{b}* of a bucket can be determined as another statistic value (e.g., a median value) of utility scores of tokens assigned to the bucket.

At 612, a target bucket (*bᵣ*) is sampled from the *N* buckets based on *N* bucket utility scores (*u_{b}*) of the *N* buckets. In some implementations, a probability of each bucket of the N buckets to be sampled as the target bucket can be determined based on a bucket utility score of the bucket. For example, the device model can invoke an exponential mechanism to sample *bᵣ* from the *N* buckets. The sampling probabilities of the *j^{th}* bucket (*bⱼ*) can be computed as: $p \left[R\left({t}_{i}\right)={b}_{j}\right] = \frac{exp \left(\frac{ε}{2 Δ}u\left({t}_{i}, {b}_{j}\right)\right)}{{\sum }_{k = 1}^{m} \left(\frac{ε}{2 Δ}u\left({t}_{i}, {t}_{k}\right)\right)}$
where *ε* is the privacy budget, and sensitivity Δ= max|*u*(*t*, b) - *u*(*t, b'*)|*,* where t represents any token in the input prompt, and b' and b represent any two buckets of the N buckets. A higher bucket utility score (*u_{b}*) indicates a higher probability that the bucket being sampled as the target bucket (*bᵣ*).

At 614, a replacement token ( $\hat{{t}_{ι}}$) of *tᵢ* is sampled from the target bucket (*bᵣ*). In some implementations, $\hat{{t}_{ι}}$ can be randomly sampled from *bᵣ.* In some implementations, tokens in *bᵣ* follow a uniform distribution and have equal probabilities to be sampled as $\hat{{t}_{ι}}$ ( $p = \frac{1}{\left|{b}_{r}\right|}$, where |*bᵣ*| is the quantity of tokens in *bᵣ*). In some implementations, $\hat{{t}_{ι}}$ can be sampled from *bᵣ* based on an exponential mechanism, or other suitable sampling mechanisms.

At 616, after sampling a replacement token of each token in the sequence of tokens of the input prompt, a perturbed prompt (*x̂*) corresponding to the input prompt can be generated. The perturbed prompt can be generated by replacing a replacement token of a token in the sequence of tokens of the input prompt. In some implementations, the perturbed prompt can be generated by concatenating the replacement token of each token in the sequence of tokens of the input prompt, e.g., $\hat{x} = \hat{x} + \hat{{t}_{ι}}$.

In some implementations, the client device can use the perturbed prompt as an input to a large language model. In some implementations, the large language model can be run on the client device or a server. In the latter case, the client device can send the perturbed prompt to a server running the large language model, instead of sending the input prompt to the server.

In some implementations, process 600 can provide a quantifiable privacy as: $\frac{ℙ \left[R\left({t}_{1}\right)=t′\right]}{ℙ \left[R\left({t}_{2}\right)=t′\right]} \leq {e}^{ϵ + ϵ ′}$, where $ϵ ′ = ln \left({max}_{i , j}\frac{\left|{b}_{i}\right|}{\left|{b}_{j}\right|}\right)$*.* In other words, under differential privacy with a privacy budget of (*ε* + *ε'*), adjacent tokens *t*₁ and *t*₂ can be randomized to the same output token t' with indistinguishable probability. As such, the server cannot effectively deduce the input prompt x given the perturbed prompt *x̂*.

FIG. 7 is a flow diagram of an example process 700 of managing privacy protection of input prompts. The example process 700 can be implemented by a client device (e.g., the client device 102 of FIG. 1, or the client device 502 of FIG. 5), for example, by a device model deployed at the client device. In some implementations, the example process 700 can be implemented according to example Algorithm 4 or a variant thereof. The operations shown in process 700 may not be exhaustive and other operations can be performed as well before, after, or in between any of the illustrated operations. Further, some of the operations may be omitted, performed simultaneously, or performed in a different order than shown in FIG. 7.

At 702, an input prompt in a natural language is received. In some implementations, the input prompt can be received by the client device from a user of the client device. The input prompt (x) can include a sequence of tokens, e.g., *x =* {*t*_{1'}, *t*₂, ... , *tₙ*}*.* In some implementations, a tokenizer of the client device can parse the input prompt into the sequence of tokens.

At 704, a replacement token ( $\hat{{t}_{ι}}$) is selected, from a vocabulary (*V*) of m tokens utilized by the device model deployed at the client device, for each token (*tᵢ, i* = 1, 2, ... , *n*) in the sequence of tokens of the input prompt. The replacement token can be semantically similar to *tᵢ*, and/or can have similar contextual relevance as *tᵢ* in the context of the input prompt. Specifically, step 704 includes steps 706 to 714.

At 706, a first utility metric (*̅U̅*̅) of *tᵢ* is determined. *̅U̅*̅ can be a m-dimensional vector *̅U̅*̅ = [*u*₁, *u*₂, ... , *uₘ*], where *uₖ (k =* 1, 2, ..., *m*) can be a first utility score of the *k^{th}* token in V indicating a relevance (e.g., semantic relevance) of the *k^{th}* token with respect to *tᵢ*.

In some implementations, *̅U̅*̅ can be determined based on embedding distances of tokens in V with respect to *tᵢ*, for example, according to the techniques described with respect to step 606 of FIG. 6, or with respect to step 308 of FIG. 3. For example, a distance metric (*̅D̅*̅) of *tᵢ* can be determined by an embedding layer of the device model. *̅D̅*̅ can be a m-dimensional vector, where each element in *̅D̅*̅ can indicate a distance between an embedding of a token (*t'*) in *V* and an embedding of *tᵢ*.

In some implementations, *̅U̅*̅ can be determined based on a context metric (*̅L̅*̅) of tokens in V with respect to *tᵢ*, for example, according to the techiqnues described with respect to step 306 of FIG. 3. In some implementations, *̅U̅*̅ can be determined based on a distance metric (*̅D̅*̅) and a context metric (*̅L̅*̅)*,* with respect to techniques described with respect to steps 306 to 310 of FIG. 3. For example, *̅U̅*̅ = *L̅^{λ^{L}}* . *D̅^{λ^{D}}*, where *λ_{L}* is a weight of *̅L̅*̅ and *λ_{D}* is a weight of *̅D̅*̅. In some implementations, *̅U̅*̅ can be determined based on additional or different metrics.

At 708, the *V* of *m* tokens are assigned to *N* buckets {*b*₁, *b*₂, ... , *b_{N}*} based on first utility scores of the m tokens. In some implementations, first utility scores (*u*) in *̅U̅*̅ can be sorted, and then equal width bucketing algorithm (e.g., Algorithm 2) can be applied to assign the m tokens into N buckets. For example, first utility scores *(u)* in *̅U̅*̅ from small to large, and then assigned to *N* buckets, each corresponding to an interval of first utility scores. For example, the first bucket corresponds to an interval of [*u*₁, *u*₂), the second bucket corresponds to an interval of [*u*₂, *u*₃), and so on. In some implementations, the *N* buckets are of equal width, that is, intervals of first utility scores corresponding to the N buckets are of equal width (e.g., a difference between two endpoint values of each interval is the same). The width of each bucket can be $\frac{{u}_{max} - {u}_{min}}{N}$, where *uₘₐₓ* is the maximum score among *u*₁, *u*₂, ... , *uₘ,* and *uₘᵢₙ* is the minimum score among *u*₁, *u*₂, ..., *uₘ.* Each token in V can be assigned to a bucket, where the first utility score of the token falls within the interval of first utility scores corresponding to the bucket. In some implementations, other bucketing algorithms (e.g., equal number bucketing) can be applied to assign the m tokens into *N* buckets based on the utility scores (*u*) in *U̅.*

At 710, a second utility metric ( *̅H̅*̅ ) of *tᵢ* is determined. *̅H̅*̅ can be a m -dimensional vector *̅H̅*̅ = [*h*₁, *h*₂, ... , *hₘ*], where *hₖ (k =* 1, 2, ..., m) can be a second utility score of the *k^{th}* token in *V. hₖ* can be determined based on *uₖ*, a quantity of tokens assigned to the same bucket as the *k^{th}* token, and a noise: ${h}_{k} = {u}_{k} + ln \frac{1}{{\left|b\left({t}_{j}\right)\right|}^{α}} + Expo \left(\frac{{ϵ}_{1}}{2 Δ}\right)$
where |*b*(*tₖ*)| is the quantity of tokens assigned to the same bucket as the *k^{rh}* token, and $Expo \left(\frac{{ϵ}_{1}}{2 Δ}\right)$ can be noise sampled based on a first exponential distribution having a privacy budget *ε*₁ and a sensitivity Δ= max|*u*(*t*, *t'*) - *u*(*t, t*")|, where t represents any token in the input prompt, and t' and *t*" represent any two tokens in *V.* In some implementations, *hₖ* decreases with an increase of |*b*(*tₖ*)|.

At 712, a candidate set of tokens (A) can be determined. The candidate set of tokens can include tokens in V having a second utility score (h) greater than *uₘₐₓ:* $Λ ← \left\{j:{h}_{j}\geq {u}_{max}\right\}$

As such, the candidate set of tokens can include tokens that have a higher utility, while taking into consideration the quantity of tokens assigned to the same bucket.

At 714, the replacement token ( $\hat{{t}_{ι}}$) of *tᵢ* is sampled from the candidate set of tokens (A). In some implementations, $\hat{{t}_{ι}}$ can be sampled from A based on a second exponential distribution having a privacy budget *ε*₂ and a sensitivity Δ= max|*u*(*t*, *t*') - *u*(*t*, t") |. The sampling probabilities of the *r^{th}* token in *Λ* can be determined based on *uᵣ*, e.g., computed as: $p \left[R\left({t}_{i}\right)={t}_{r}\right] = \frac{exp \left(\frac{{ϵ}_{2}}{2 Δ}u\left({t}_{i}, {t}_{r}\right)\right)}{{\sum }_{j = 1}^{\left|Λ\right|} \left(\frac{ϵ}{2 Δ}u\left({t}_{i}, {t}_{k}\right)\right)}$
where |*Λ*| is the quantity of tokens in the candidate set.

At 716, after sampling a replacement token of each token in the sequence of tokens of the input prompt, a perturbed prompt (*x̂*) corresponding to the input prompt can be generated. The perturbed prompt can be generated by concatenating the replacement token of each token in the sequence of tokens of the input prompt, e.g., $\hat{x} = \hat{x} + \hat{{t}_{ι}}$.

In some implementations, the client device can use the perturbed prompt as an input to a large language model. In some implementations, the large language model can be run on the client device or a server. In the latter case, the client device can send the perturbed prompt to a server running the large language model, instead of sending the input prompt to the server.

In some implementations, process 700 can provide a quantifiable privacy as: $\frac{ℙ \left[R\left({t}_{1}\right)=t′\right]}{ℙ \left[R\left({t}_{2}\right)=t′\right]} \leq {e}^{{ϵ}_{1} + {ϵ}_{2} + ϵ ′}$, where $ϵ ′ = ln \left({max}_{i , j}\frac{\left|{b}_{i}\right|}{\left|{b}_{j}\right|}\right)$. In other words, under differential privacy with a privacy budget of (*ε*₁ + *ε*₂ + *ε*'), adjacent tokens *t*₁ and *t*₂ can be randomized to the same output token t' with indistinguishable probability. As such, the server cannot effectively deduce the input prompt x given the perturbed prompt *x̂*.

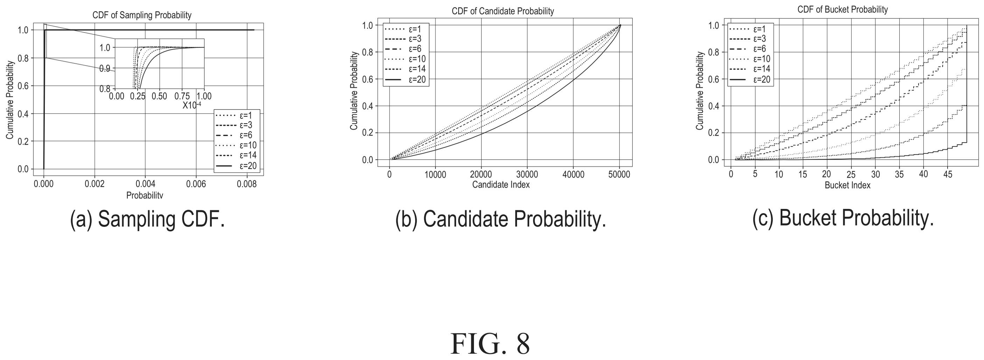

FIG. 8 illustrates example effects of sampling replacement tokens by assigning tokens in *V* to buckets, e.g., according to process 600 and process 700. Plot (a) and plot (b) show distributions of sampling probability of tokens in *V*, without assigning the tokens to buckets and performing sampling based on the buckets. Plot (a) shows a cumulative distribution function (CDF) with respect to probability, and Plot (b) shows a CDF with respect to index of candidate tokens in *V.* As shown in plot (a) and plot (b), the cumulative probability of sampling tokens with low probability (and therefore low utility) is great, the likelihood of sampling a token with high utility may therefore be low. This can be referred to as long-tail phenomenon in large sampling spaces, especially in natural language processing (NLP) domain. The long-tail phenomenon may reduce the overall utility of the perturbation process based on differential privacy.

Plot (c) shows distributions of sampling probability of tokens in *V* by assigning the tokens to buckets and performing sampling based on the buckets. After the bucketing optimization, the probability sum of all candidate tokens in the same bucket can be bounded within a certain utility interval (e.g., proportional to $exp \left(\frac{ϵ}{2 Δ}\right) mean \left({b}_{j}\right)$), where ***mean***(*bⱼ*) is the width of the buckets. As such, the cumulative probability of sampling tokens with low utility can be reduced, so that the likelihood of sampling a token with high utility can be increased, mitigating the long-tail phenomenon.

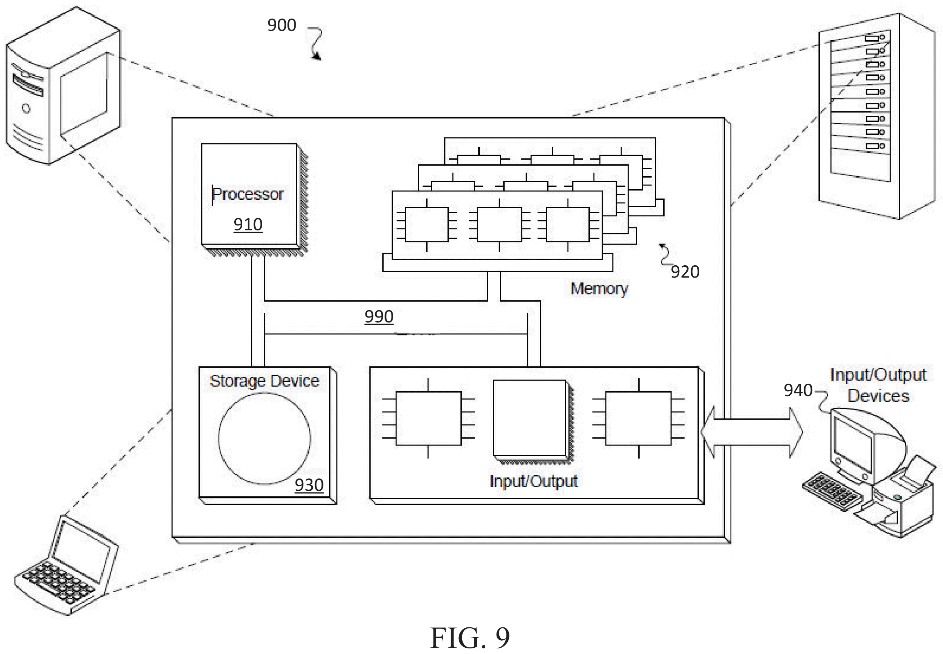

FIG. 9 is an example computer system 900. The computer system 900 can be used for the operations described in association with the implementations described herein, for example, as a client device (e.g., the client device 102 of FIG. 1, the client device 202 of FIG. 2 or the client device 502 of FIG. 5), a server (e.g., the server 104 of FIG. 1, the server 204 of FIG. 2, or the server 504 of FIG. 5). For example, the system 900 may be included in computing devices of the one or more online components and/or the one or more offline components. The system 900 includes a processor 910, a memory 920, a storage device 930, and an input/output device 940. The components 910, 920, 930, and 940 are interconnected using a system bus 990. The processor 910 is capable of processing instructions for execution within the system 900. In some implementations, the processor 910 is a single-threaded processor. The processor 910 is a multi-threaded processor. The processor 910 is capable of processing instructions stored in the memory 920 or on the storage device 930 to display graphical information for a user interface on the input/output device 940.

The memory 920 stores information within the system 900. In some implementations, the memory 920 is a computer-readable medium. The memory 920 can be a volatile memory unit or a non-volatile memory unit. The storage device 930 is capable of providing mass storage for the system 900. The storage device 930 is a computer-readable medium. The storage device 930 may be a floppy disk device, a hard disk device, an optical disk device, or a tape device. The input/output device 940 provides input/output operations for the system 900. The input/output device 940 includes a keyboard and/or pointing device. The input/output device 940 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (600) comprising:
receiving (602) an input prompt in a natural language, wherein the input prompt comprises a sequence of tokens;
for a first token of the sequence of tokens:
determining (606) a utility metric comprising m utility scores, wherein each of the m utility scores indicates a relevance of a token in a vocabulary of m tokens with respect to the first token;
assigning (608) the vocabulary of m tokens to *N* buckets based on the utility scores of the m tokens, wherein each bucket corresponds to an interval of utility scores;
determining (610) *N* bucket utility scores of the *N* buckets based on utility scores of tokens assigned to the N buckets;
sampling (612) a target bucket from the *N* buckets based on the *N* bucket utility scores of the *N* buckets; and
sampling (614) a replacement token corresponding to the first token from the target bucket; and
generating (616) a perturbed prompt corresponding to the input prompt, wherein the perturbed prompt comprises the replacement token.

2. The method of claim 1, comprising:
for each token of the sequence of tokens, sampling a replacement token from the vocabulary, wherein the perturbed prompt comprises replacement tokens corresponding to the sequence of tokens.

3. The method of claim 1, wherein intervals of utility scores corresponding to the N buckets are of equal width.

4. The method of claim 1, wherein determining (610) the N bucket utility scores of the N buckets comprises:
determining a mean of utility scores of tokens assigned to a bucket as a bucket utility score of the bucket.

5. The method of claim 1, wherein sampling (612) the target bucket from the N buckets comprises:
sampling the target bucket from the N buckets based on an exponential mechanism, wherein a probability of each bucket of the N buckets to be sampled as the target bucket is based on a bucket utility score of the bucket.

6. The method of claim 1, wherein the replacement token is randomly sampled from the target bucket, wherein tokens in the target bucket have equal probabilities to be sampled as the replacement token.

7. The method of claim 1, wherein determining (606) the utility metric comprises:
determining a distance metric indicating distances between an embedding of the first token and an embedding of each token in the vocabulary of m tokens.

8. The method of claim 7, wherein determining (606) the utility metric further comprises:
determining a context metric indicating a contextual relevance of each token of the vocabulary of m tokens in the context of the sequence of tokens in the input prompt; and
determining the utility metric based on the context metric and the distance metric.

9. The method of claim 1, further comprising:
sending the perturbed prompt to a server running a language model.

10. One or more non-transitory computer-readable storage media storing one or more instructions that, when executable by one or more computers, cause the one or more computers to perform the method according to any of claims 1 to 9.

11. A computer-implemented system, comprising:
one or more computers; and
one or more computer memory devices interoperably coupled with the one or more computers and having non-transitory computer-readable storage media storing one or more instructions that, when executed by the one or more computers, perform the method according to any of claims 1 to 9.
